Europäisches Patentamt

European Patent Office

Office européen des brevets

(19)

(11) Publication number: **0 013 454**
**B1**

(12) **EUROPEAN PATENT SPECIFICATION**

(45) Date of publication of patent specification: **14.03.84**

(51) Int. Cl.³: **F 16 L 39/04**

(21) Application number: **79200793.2**

(22) Date of filing: **20.12.79**

(54) **A rotatable swivel for one or more conduits.**

(30) Priority: **22.12.78 NL 7812505**

(43) Date of publication of application:
**23.07.80 Bulletin 80/15**

(45) Publication of the grant of the patent:
**14.03.84 Bulletin 84/11**

(84) Designated Contracting States:
**BE FR GB IT NL**

(56) References cited:
**FR - A - 2 422 097**
**GB - A - 980 026**
**NL - A - 7 310 795**
**US - A - 4 126 336**

(73) Proprietor: **SINGLE BUOY MOORINGS INC.**
**P.O. Box 844**
**CH-1701 Fribourg (CH)**

(72) Inventor: **Foolen, Johannes A.**
**34, Avenue de Provence**
**Eze-sur-Mer (FR)**

(74) Representative: **van der Beek, George Frans et al,**
**Nederlandsch Octrooibureau Johan de Wittlaan**
**15 P.O. Box 29720**
**NL-2502 LS Den Haag (NL)**

Courier Press, Leamington Spa, England.

## A rotatable swivel for one or more conduits

The invention relates to a rotatable swivel for one or more conduits comprising one or more annular chambers each of which being formed by a radially inner wall portion and a radially outer wall portion, one of said wall portions being stationary and the other of said wall portions being rotatably mounted with respect thereto, said rotatable wall portion being supported on said stationary wall portion by bearing means of the type adapted to take up forces in axial and radial directions, said wall portions being sealed with respect to each other by annular seals, each wall portion having a single—or multiline connection to the one or more conduits. A swivel of this type is known from e.g. NL—A—7310795 and US—A—4.126.336.

In this known swivel the wall portions have been supported onto each other by means of two bearings spaced apart in axial direction and located between the stationary wall portion and the rotatable wall portion which bearings have been combined with annular seals arranged axially on either side of the bearings. In case of rotatable swivels of mooring buoys the swivels have large dimensions. Said bearings and the annular seals, are subjected to changing loads due to the fact that the buoy is moved by the waves of the sea and the conduits or hoses connected to the swivel are moved differently. As the swivel has to remain liquid and gas tight the known rotatable swivels have a design which is complicated in manufacturing, is expensive and is extremely difficult in case repair of a bearing or a seal becomes necessary.

The object of the invention is to provide a rotatable swivel which is simple of construction and easy to repair.

According to the invention this object is attained in that each rotatable wall portion is supported on the stationary wall portion by means of a single axial-radial bearings located axially on one of the front faces of said wall portions with the outer ring of said bearing being attached to the outer wall portion and the inner ring being attached to the inner wall portion.

Accordingly the invention provides in a construction in which each rotatable wall portion has been supported upon its associated stationary wall portion by a single bearing only but this bearing is of a construction which can take up axial loads in opposite directions. This more complicated bearing, however, is located in a plane due to which the construction of the two wall portions remains simple which is an advantage in obtaining proper sealing whilst this location of the bearings simplifies repair because after a few disconnections a bearing and/or its associated stationary and rotatable wall portions can be shifted laterally out of the stack of annular chambers without the necessity of completely removing the other chambers.

Due to the fact that the bearing is moved axially to the side of the two wall portions which have to be supported with respect to each other, more place is available for proper sealing said wall portions upon each other.

In case of at least two axially successive annular chambers the rotatable swivel according to the invention can be designed such that the bearings of all chambers are located at the same side of the respective wall portions, that each bearing between two axially successive chambers serves as a common intermediate bearing and that the rotatable wall portions and/or the stationary wall portions of all chambers are interconnected e.g. by bolts. Due to the interconnection of e.g. the rotatable wall portions the outer bearing rings are clamped between successive rotatable wall portions and if both wall portions are properly centered with respect to said outer bearing ring the bearings placed between successive chambers do function as a bearing for both chambers so that with the provision of only one axial radial bearing for the wall portions of each chamber successive chambers in fact have two bearings.

Preferably the stationary wall portions are coupled to each other by means of a ring placed at the level of the bearing between adjacent stationary wall portions, said ring interlocking the adjacent stationary wall portions by means of cams of the stationary wall portions engaging into recesses of the ring or cams of said ring engaging into recesses of the stationary wall portions.

The invention will be elucidated in further detail with reference to the drawings.

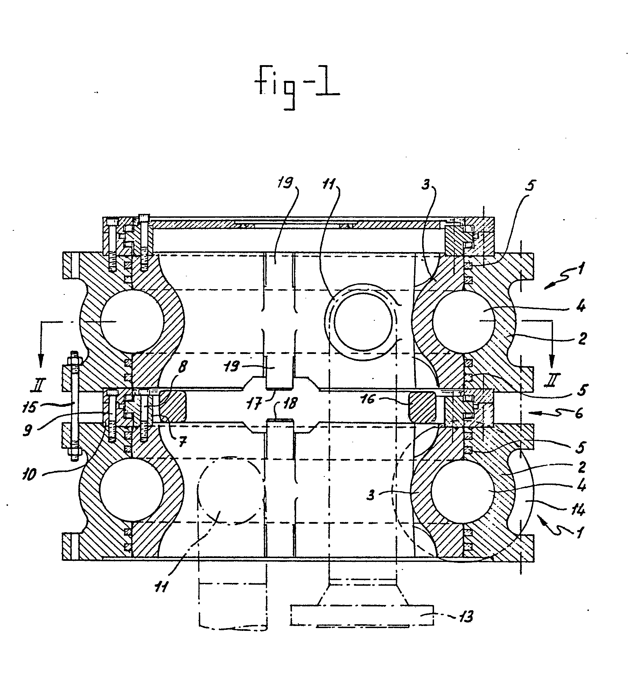

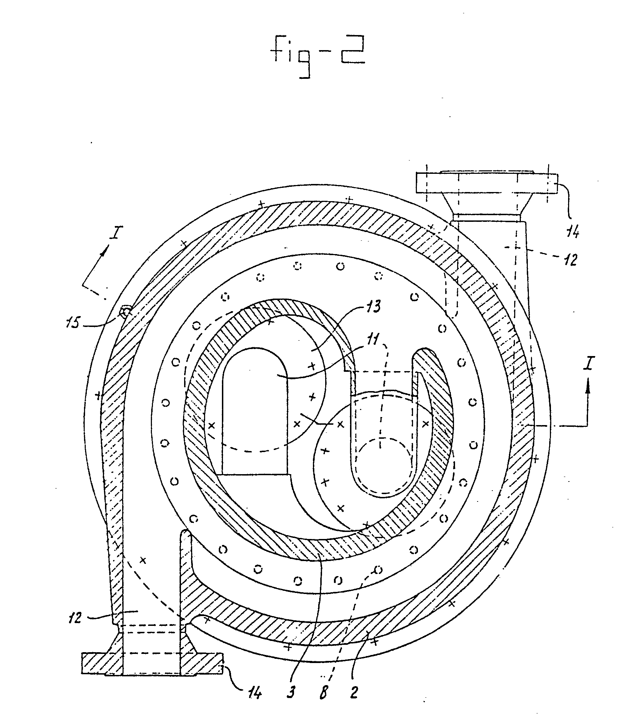

Figure 1 shows a longitudinal section along the line I—I in Figure 2.

Figure 2 shows a horizontal section through one chamber along the line II—II in Figure 1.

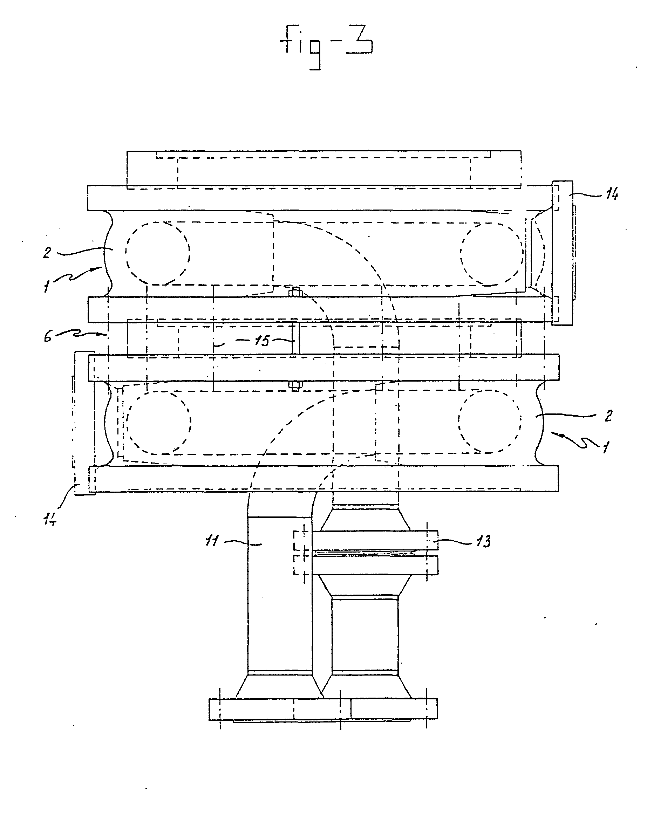

Figure 3 represents a side elevation.

The drawings show a rotatable swivel including two chambers. Each chamber 1 consists of a rotatable wall portion 2 and a stationary wall portion 3 together constituting an essentially annular channel 4. Between the rotatable wall portion 2 and the stationary wall portion 3 there have been provided seals 5 which seals in the represented embodiment have been accommodated in grooves within the inner wall of the rotatable wall portion 2. To each one of the chambers there have been fastened an axial-radial bearing 6, the inner ring 7 of which has been fastened to the stationary wall portion 3 by means of bolts 8 and the outer ring 10 of which has been fastened to the rotatable wall portion 2 by means of bolts 9. In the drawing there has been shown a roller bearing having axially operative rollers and radially operative rollers, for example a roller bearing of the Rote-Erde-type.

Each channel 4 possesses an inlet part 11 and an outlet part 12 each of which has been provided with a flange 13 and 14 respectively for connection to (not shown) conduits.

The rotatable wall portions 2 of the chambers placed on top of each other have been connected to each other by means of bolts 15. Between the stationary wall portions 3 and at the same level as the bearing there has been accommodated an annular coupling means 16 provided with recesses 17, 18 which may be engaged by cams 19 of the stationary wall portion 3. The stationary wall portions 3 may consequently be coupled to each other in the circumferential direction.

This coupling is a loose-fixed joint not requiring a mutual aligning when utilizing several units including bearing. Furthermore this joint is disengaged upon moving apart of the chambers.

Although only two chambers have been shown in the drawings it will be clear that more than two chambers may be joined together in the indicated manner.

Likewise it is conceivable that there will be only a single chamber optionally being subdivided and suitable for providing several inlet and outlet line connections. Several chambers of the latter type may of course be joined together. Stated otherwise each chamber 1 may be provided with more than one channel 4.

From the embodiment shown in the drawings it will be clear that the disengagement of the conduit at the flange 14 is possible without any difficulty. Upon removal of the bolts 15 and the disengagement of the flange 13 the upper chamber 1 may be removed in upward direction.

## Claims

1. A rotatable swivel for one or more conduits comprising one or more annular chambers (1) each of which being formed by a radially inner wall portion (3) and a radially outer wall portion (2), one of said wall portions (3) being stationary and the other of said wall portions (2) being rotatably mounted with respect thereto, said rotatable wall portion (2) being supported on said stationary wall portion (3) by bearing means (6) of the type adapted to take up forces in axial and radial directions, said wall portions (2, 3) being sealed with respect to each other by annular seals (5), each wall portion having a single—or multiline connection (11, 13; 12, 14) to the one or more conduits, characterized in that each rotatable wall portion (2) is supported on the stationary wall portion (3) by means of a single axial-radial bearing (6) located axially on one of the front faces of said wall portions (2, 3) with the outer ring (10) of said bearing (6) being attached to the outer wall portion (2) and the inner ring (7) being attached to the inner wall portion (3).

2. A rotatable swivel as claimed in claim 1 having at least two axially successive annular chambers (1), characterized in that the bearings (6) of all chambers (1) are located at the same side of the respective wall portions (2, 3), that each bearing (6) between two axially successive chambers (1) serves as a common intermediate bearing and that the rotatable wall portions (2) and/or the stationary wall portions (3) of all chambers (1) are interconnected, e.g. by bolts (15).

3. A rotatable swivel as claimed in claim 2, characterized in that the stationary wall portions (3) are coupled to each other by means of a ring (16) placed at the level of the bearing (6) between adjacent stationary wall portions, said ring (16) interlocking the adjacent stationary wall portions (3) by means of cams (19) of the stationary wall portions (3) engaging into recesses (17, 18) of the ring (16) or cams of said ring engaging into recesses of the stationary wall portions.

## Patentansprüche

1. Derhverbindung für eine oder mehrere Leitungen, mit einer oder mehreren Ringkammern (1), die jeweils durch einen radialen Innenwandabschnitt (3) und einen radialen Außenwandabschnitt (2) gebildet werden, von denen ein Wandabschnitt (3) feststehend ist und zu diesem der andere Wandabschnitt (2) drehbar montiert ist, der drehbare Wandabschnitt (2) auf dem feststehenden Wandabschnitt (3) durch eine Lageranordnung (6) gelagert ist, die in axialer und in radialer Richtung wirkende Kräfte aufzunehmen vermag, wobei die Wandabschnitte (2, 3) gegeneinander durch Ringdichtungen (5) abgedichtet sind und jeder Wandabschnitt eine Einzelleitungs- oder Mehrfachleitungs-Verbindung (11, 13; 12, 14) mit einer oder mehreren Leitungen aufweist, dadurch gekennzeichnet, daß jeder drehbare Wandabschnitt (2) auf dem feststehenden Wandabschnitt (3) mittels eines einzelnen Axial-Radial-Lagers (6) gelagert ist, welches axial auf einer der Stirnseiten der Wandabschnitte (2, 3) angeordnet ist, wobei der Außenring (10) des Lagers (6) an dem Außenwandabschnitt (2) und der Innenring (7) an dem Innenwandabschnitt (3) befestigt ist.

2. Drehverbindung nach Anspruch 1, mit mindestens zwei axial aneinander anschließenden Ringkammern (1), dadurch gekennzeichnet, daß die Lager (6) aller Kammern (1) auf der gleichen Seite der jeweiligen Wandabschnitte (2, 3) angeordnet sind, daß jedes Lager (6) zwischen zwei axial aneinander anschließenden Kammern (1) als gemeinsames Zwischenlager dient, und daß die drehbaren Wandabschnitte (2) und/oder die feststehenden Wandabschnitte (3) sämtlicher Kammern (1) z.B. mittels Bolzen (15) untereinander verbunden sind.

3. Drehverbindung nach Anspruch 2, dadurch gekennzeichnet, daß die feststehenden Wandabschnitte (3) mittels eines Rings (16) aneinandergekoppelt sind, der in der Höhe des Lagers (6) zwischen benachbarten feststehenden Wandabschnitten liegt, daß der Ring (16) die benachbarten feststehenden Wandabschnitte (3) mittels an den feststehenden Wandabschnitten (3) vorgesehenen Nocken (19) verriegelt, welche in Ausnehmungen (17, 18) des Rings (16) eingreifen, oder mittels an dem Ring vorgesehenen Nocken verriegelt, die in Ausnehmungen der feststehenden Wandabschnitte eingreifen.

**Revendications**

1. Raccord orientable pour un ou plusieurs conduits comprenant une ou plusieurs chambres annulaires (1) dont chacune est formée par une partie de paroi (3) intérieure dans le sens radial et une partie de paroi (2) extérieure dans le sens radial, l'une (3) desdites parties de paroi étant fixe et l'autre (2) desdites parties de paroi étant montée de façon tournante par rapport à celle-ci, ladite partie de paroi (2) pouvant tourner étant supportée par ladite partie de paroi fixe (3) à l'aide d'un moyen formant palier (6) du type adapté pour absorber des forces dans des directions axiales et radiales, lesdites parties de paroi (2, 3) étant rendues étanches l'une par rapport à l'autre par des joints d'étanchéité annulaires (5), chaque partie de paroi comportant un raccordement mono ou multivoies (11, 13; 12, 14) avec le ou les conduits, caractérisé en ce que chaque partie de paroi (2) pouvant tourner est supportée par la partie de paroi fixe (3) au moyen d'un seul roulement (6) pour charges axiales-radiales placé axialement sur une des faces avant desdites parties de paroi (2, 3), la bague extérieure (10) dudit roulement (6) étant fixée à la partie de paroi extérieure (2) et la bague intérieure (7) étant fixée à la partie de paroi intérieure (3).

2. Raccord orientable suivant la revendication 1, comportant au moins deux chambres annulaires (1) successives dans le sens axial, caractérisé en ce que les roulements (6) de toutes les chambres (1) sont placés sur le même côté des parties de paroi respectives (2, 3), que chaque roulement (6) entre deux chambres (1) successives dans le sens axial sert de roulement intermédiaire commun et que les parties de paroi (2) pouvant tourner et/ou les parties de paroi fixes (3) de toutes les chambres (1) sont fixées les unes aux autres, par exemple par des boulons (15).

3. Raccord orientable suivant la revendication 2, caractérisé par le fait que les parties de paroi fixes (3) sont accouplées l'une à l'autre au moyen d'une bague (16) placée au niveau du roulement (6) entre les parties de paroi fixes adjacentes, ladite bague (16) rendant solidaires les parties de paroi fixes adjacentes (3) par le fait que des cames (19) des parties de paroi fixes (3) sont engagées dans des évidements (17, 18) de la bague (16) ou que des cames de ladite bague sont engagées dans des évidements des parties de paroi fixes.

Fig-1

# Fig-2

Fig-3

3